# EUROPEAN PATENT APPLICATION

(11) **EP 4 807 397 A1**
(43) Date of publication of application: **16.09.2026**
(21) Application number: 26164175.7
(22) Date of filing: 12.03.2026
(51) Int. Cl.: G01S 13/76, G07C 9/00, H04W 4/00, H04K 1/00, H04K 3/00, H04W 12/00

(54) **METHOD AND APPARATUS FOR PERFORMING CHANNEL SOUNDING USING TRANSPARENT PSEUDO RANDOM NOISE**

(30) Priority: 13.03.2025 KR 20250032893; 29.10.2025 KR 20250158756
(71) Applicant: Samsung Electronics Co., Ltd., Suwon-si, Gyeonggi-do 16677 (KR)
(72) Inventor: TONG, Fei, Bassingbourn, SG8 5NX (GB); SHARPE, Jacob C, Cambridge, Cambridgeshire, CB226RN (GB)
(74) Representative: Kuhnen & Wacker Patent- und Rechtsanwaltsbüro PartG mbB

(57) **Abstract**

Methods and devices for performing channel sounding, including: receiving a channel sounding signal generated based on a sounding sequence and an artificial noise symbol from the second electronic device; subtracting the artificial noise symbol from the channel sounding signal to reconstruct the sounding sequence; calculating a travel time between the first electronic device and the second electronic device based on the sounding sequence; and determining a distance between the first electronic device and the second electronic device based on the travel time.

## Description

### BACKGROUND

### 1. Field

The disclosure relates to managing wireless communication, and more particularly to performing channel sounding to estimate a distance between two electronic devices.

### 2. Description of Related Art

Channel sounding (CS) may refer to techniques for determining a distance between two wireless communication devices. For example, some approaches for performing CS may include calculating a round trip time (RTT) corresponding to signals transmitted between the two wireless communication devices, and then using the calculated RTT to estimate the distance.

For example, the Bluetooth Low Energy (BLE) standard may include a CS extension which specifies packet types that may be used to support RTT measurement. According to the CS extension, some CS packet types may have a payload that includes a random sequence (or a pseudo-random sequence) and some CS packet types may have a payload that includes a sounding sequence. The sounding sequence may refer to a repeated pattern of bits, and packets which include the sounding sequence may be used to measure RTT with relatively fine resolution. However, when a known bit pattern is used, the CS packet may be vulnerable to a man-in-the-middle spoofing attack, in which an attacker may regenerate the CS packet including the sounding sequence with a timing advancement so that the victim devices may observe a lower RTT, causing the victim devices to determine that they are closer together than they actually are.

To counter such attacks, random marker sequences may be embedded in the sounding sequence to make the sounding sequence less predictable. However, some man-in-the-middle spoofing attack may use techniques such as early commit and late detect (ECLD) to spoof even a waveform including a random marker sequence. For example, if the attacker is able to get physically close to the victim device which transmits sounding sequence payload, the attacker may be able to obtain a relatively high signal to noise (SNR) ratio for demodulation of the channel sounding signal it is spoofing, which may allow the attacker to detect the marker sequence with relatively small detection delay, and therefore successfully complete the man-in-the-middle spoofing attack.

### SUMMARY

Provided are methods and devices for performing determining a distance between two electronic devices using a channel sounding signal generated based on a sounding sequence and pseudo-random noise symbols that are transparent to the two electronic devices, and that may help to detect and prevent potential attacks such as spoofing attacks.

Additional aspects will be set forth in part in the description which follows and, in part, will be apparent from the description, or may be learned by practice of the presented embodiments.

In accordance with an aspect of the disclosure, a first electronic device for performing channel sounding includes: a transceiver configured to communicate with a second electronic device; at least one processor; and a memory configured to store instructions which, when executed by the at least one processor, cause the first electronic device to: receive a channel sounding signal generated based on a sounding sequence and an artificial noise symbol from the second electronic device; subtract the artificial noise symbol from the channel sounding signal to reconstruct the sounding sequence; calculate a travel time between the first electronic device and the second electronic device based on the sounding sequence; and determine a distance between the first electronic device and the second electronic device based on the travel time.

In accordance with an aspect of the disclosure, a method of performing channel sounding includes: receiving, by a first electronic device from a second electronic device, a channel sounding signal generated based on a sounding sequence and an artificial noise symbol from the second electronic device; subtracting the artificial noise symbol from the channel sounding signal to reconstruct the sounding sequence; calculating a travel time for the channel sounding signal between the first electronic device and the second electronic device based on the sounding sequence; and determining a distance between the first electronic device and the second electronic device based on the travel time.

In accordance with an aspect of the disclosure, a second electronic device for performing channel sounding includes: a Gaussian frequency-shift keying (GFSK) modulator configured to generate a sounding sequence; an orthogonal frequency-division multiplexing (OFDM) modulator configured to generate an artificial noise symbol; at least one processor; and a memory configured to store instructions which, when executed by the at least one processor, cause the second electronic device to: generate a channel sounding signal based on a sum of the sounding sequence and the artificial noise symbol; and transmit the channel sounding signal to a receiver.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a block diagram illustrating an electronic device in a network environment according to embodiments;
FIG. 2 is a block diagram illustrating an electronic device according to embodiments;
FIGS. 3A-3C are diagrams for explaining an example process for determining a distance between electronic devices using channel sounding, according to embodiments;
FIG. 4 is a block diagram illustrating an electronic device according to embodiments;
FIG. 5 is a graph illustrating an example of a channel sounding signal, according to embodiments;
FIG. 6 is a graph illustrating an example of a channel sounding signal, according to embodiments;
FIGS. 7A-7B are diagrams illustrating examples of elements used to generate a channel sounding signal, according to embodiments;
FIGS. 8A-8E are diagrams illustrating example arrangements of a marker sequence included in a channel sounding signal, according to embodiments;
FIGS. 9-11 are diagrams illustrating example processes for reconstructing a marker sequence included in a channel sounding signal, according to embodiments; and
FIG. 12 is a flowchart illustrating an example process for performing channel sounding, according to embodiments.

### DETAILED DESCRIPTION

As discussed above, channel sounding (CS) may refer to a technique that may be used to determine a distance between two wireless communication devices. For example, some CS approaches may include calculating a round trip time (RTT) corresponding to signals transmitted between the two wireless communication devices, and then using the calculated RTT to estimate the distance. However, some CS approaches may be vulnerable to attacks such as man-in-the-middle spoofing attacks.

Accordingly, embodiments may relate to methods and apparatuses which may generate artificial noise which may be added to CS signals in order to assist in detecting and preventing such attacks. For example, the artificial noise may be generated and added to the CS signals in such a way that it is easily removed by legitimate devices (e.g., devices which are performing the CS) while being difficult or impossible for an attacker to accurately spoof.

Advantages and features of embodiments of the disclosure, and methods of achieving them, will be more apparent with reference to the description below in conjunction with the accompanying drawings. However, embodiments are not limited thereto. In addition, specific configurations described only in a particular embodiment may be used in other embodiments. Throughout the description below, the same reference numerals may generally refer to the same elements.

The terminology used herein is for the purpose of describing example embodiments and is not intended to limit the scope of the disclosure. In this specification, the singular also includes the plural, unless specifically stated otherwise in the phrase. As used herein, "comprises" and/or "comprising" may mean that a recited element, step, operation, and/or apparatus does not exclude the presence or addition of one or more other elements, steps, operations, and/or apparatuses.

Unless otherwise defined, all terms (including technical and scientific terms) used herein may be used with the meaning commonly understood by those of ordinary skill in the art to which this disclosure belongs. In addition, terms defined in a commonly used dictionary are not to be interpreted ideally or excessively unless clearly defined in particular.

In addition, before proceeding with the detailed description that follows, definitions of certain words and phrases used herein are set forth. The terms "comprise" and "include" and derivatives of the terms "comprise" and "include" denote inclusive without limitation. The word "connects" and derivatives of the word "connect" refer to any direct or indirect communication between two or more components, whether or not the two or more components are in physical contact with each other. The terms "transmit", "receive", and "communicate", and derivatives of the terms "transmit", "receive", and "communicate" include both direct and indirect communication. The word "or" is an inclusive word meaning 'and/or'. The word "related to" and derivatives of "related to" denote to include, to be included in, to interconnect with, to imply, to be implied in, to connect with, to combine with, to communicate with, to cooperate with, to intervene, to place alongside, to approximate, to be bound by, to have, to have the characteristics of, to relate to, and the like. The term "controller" denotes any apparatus, system, or part thereof that controls at least one operation. Such a controller may be implemented in hardware or a combination of hardware and software and/or firmware. Functions associated with any particular controller may be centralized or distributed, either locally or remotely. The phrase "at least one", when used with a list of items, denotes that different combinations of one or more of the listed items may be used, and that only one item in the list may be required. For example, "at least one of A, B, and C" includes any one of combinations of A, B, C, A and B, A and C, B and C, and A, B and C.

In addition, various functions described below may be implemented or supported by artificial intelligence technology or one or more computer programs, and each of the programs may include computer-readable program code and may be embodied in a computer-readable medium. The terms "application" and "program" refer to one or more computer programs, software components, sets of instructions, procedures, functions, objects, classes, instances, related data, or portions thereof suitable for implementation of suitable computer-readable program code. The term "computer-readable program code" includes computer code of any type, including source code, object code, and executable code. The term "computer-readable medium" includes any type of medium that may be accessed by a computer, such as read only memory (ROM), random access memory (RAM), a hard disk drive, a compact disk (CD), a digital video disk (DVD), or any other type of memory. A "non-transitory" computer-readable medium excludes wired, wireless, optical, or other communication links that transmit transitory electrical or other signals. Non-transitory computer-readable media includes media in which data may be permanently stored, and media in which data is stored and may be overwritten later, such as a rewritable optical disc or a removable memory apparatus.

In various example embodiments described below, a hardware approach is described as an example. However, because various example embodiments include technology using both hardware and software, the various example embodiments do not exclude a software-based approach.

In addition, terms referring to control information, terms referring to entries, terms referring to network entities, terms referring to messages, and terms referring to a component of an apparatus, used in the description to be described below, are examples for convenience of description. Accordingly, the example embodiments are not limited to the terms described below, and other terms having equivalent technical meanings may be used.

As is traditional in the field, embodiments may be described and illustrated in terms of blocks which carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports such as printed circuit boards and the like. The circuits included in a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

Hereinafter, electronic devices are described according to embodiments of the present disclosure, but one or more of the electronic devices may be referred to as terminal, a mobile station, a mobile equipment (ME), and a user equipment (UE), a user terminal (UT), a subscriber station (SS), a wireless device, a handheld device, or an access terminal (AT). In some embodiments, one or more of the electronic devices may be, for example, a mobile phone, a personal digital assistant (PDA), a smart phone, a wireless modem, and any other device having a communication function, such as a notebook computer.

In the description below, reference is made to Bluetooth wireless communication technology, but embodiments may be applied other communication systems having a similar technical background.

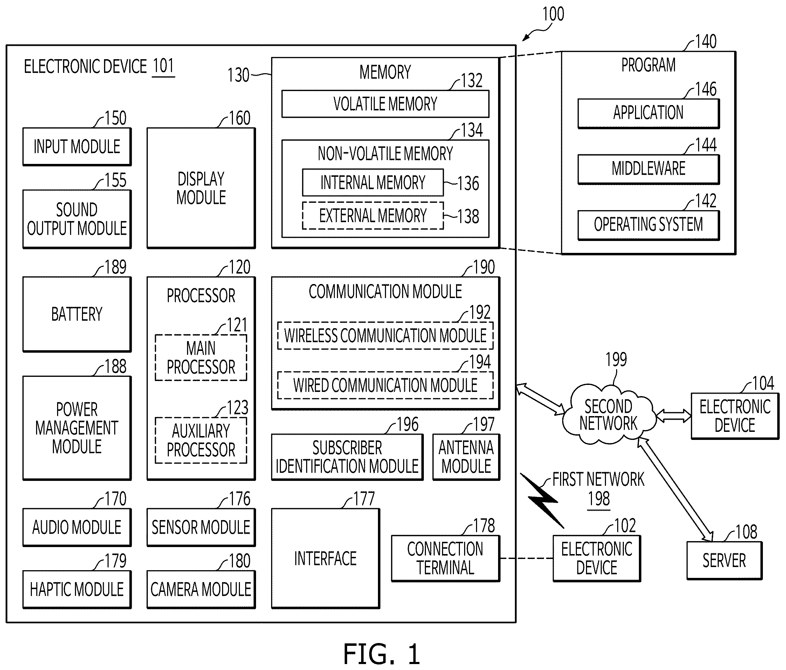

FIG. 1 is a block diagram illustrating an example of an electronic device in a network environment, according to embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). In some embodiments, the first network 198 may be a Bluetooth network, but embodiments are not limited thereto. According to embodiments, the electronic device 101 may communicate with the electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to embodiments, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to embodiments, the auxiliary processor 123 (e.g., an image signal processor or a communication processor) may be implemented as part of another component (e.g., the camera module 180 or the communication module 190) functionally related to the auxiliary processor 123. According to embodiments, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to embodiments, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to embodiments, the display module 160 may include a touch sensor adapted to detect a touch, or a pressure sensor adapted to measure the intensity of force incurred by the touch.

The audio module 170 may convert a sound into an electrical signal and vice versa. According to embodiments, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to embodiments, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to embodiments, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to embodiments, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to embodiments, the haptic module 179 may include, for example, a motor, a piezoelectric element, or an electric stimulator.

The camera module 180 may capture a still image or moving images. According to embodiments, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to embodiments, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to embodiments, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to embodiments, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to embodiments, the antenna module 197 may include an antenna including a radiating element composed of a conductive material or a conductive pattern formed in or on a substrate (e.g., a printed circuit board (PCB)). According to embodiments, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to embodiments, another component (e.g., a radio frequency integrated circuit (RFIC)) other than the radiating element may be additionally formed as part of the antenna module 197.

According to one embodiment, the antenna module 197 may form a mmWave antenna module. According to embodiments, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to embodiments, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to embodiments, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to embodiments, the external electronic device 104 or the server 108 may be included in the second network 199. The electronic device 101 may be applied to intelligent services (e.g., smart home, smart city, smart car, or healthcare) based on 5G communication technology or loT-related technology.

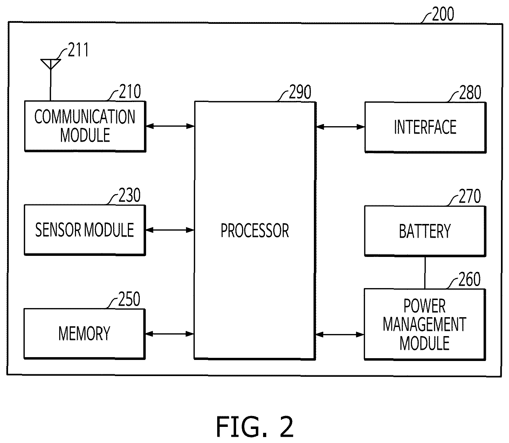

FIG. 2 is a block diagram illustrating another example configuration of an electronic device, according to embodiments.

Referring to FIG. 2, the electronic device 200 may include an antenna module 211, a communication module 210, a sensor module 230, a memory 250, a power management module 260, a battery 270, an interface 280, and a processor 290.

According to embodiments, the communication module 210 may include at least one of a wireless communication module (e.g., a Bluetooth communication module, a cellular communication module, a Wi-Fi communication module, a near-field communication (NFC) communication module, and a GNSS communication module) and a wired communication module (e.g., a LAN communication module and a PLC communication module).

The communication module 210 may directly or indirectly communicate with one or more other electronic devices using one or more communication modules included therein. The communication module 210 may operate independently of the processor 290 and include one or more communication processors supporting wired or wireless communication. In an embodiment, the communication module 210 may also be referred to as a communication interface.

According to embodiments, the antenna module 211 may transmit or receive signals or information to or from another electronic device.

According to embodiments, the antenna module 211 may include a plurality of antennas, and at least one antenna suitable for a communication scheme used in the communication network may be selected from the plurality of antennas by the communication module 210. Signals or information may be transmitted or received between the communication module 210 and another electronic device through the at least one selected antenna.

According to embodiments, the memory 250 may store a variety of data used by at least one element (e.g., the processor 290, the communication module 210, or the sensor module 230) of the electronic device 200. The data may include, for example, software and input data or output data for instructions related thereto. The memory 250 may include a volatile memory or a nonvolatile memory.

According to embodiments, the power management module 260 may manage power supplied to the electronic device 200. According to embodiments, the power management module 260 may be implemented as, for example, at least a part of the PMIC. According to embodiments, the power management module 260 may include a battery charging module.

According to embodiments, when the power management module 260 is electrically connected to an external power supply device through wireless or wired connection, the power management module 260 may receive power supplied from the external power supply device to charge the battery 270.

According to embodiments, the battery 270 may supply power to at least one element of the electronic device 200. According to embodiments, battery 270 may include, for example, a rechargeable battery.

According to embodiments, the interface 280 may support one or more specified protocols to be used in order for the electronic device 200 to directly connect (e.g., wired connection) with another electronic device. According to embodiments, the interface 280 may include, for example, an HDMI, a USB interface, an SD card interface, or an audio interface.

According to embodiments, the processor 290 may execute software to control at least one other element (e.g., hardware or software elements) of the electronic device 200 connected to the processor 290 and perform processing of a variety of data or operations.

According to embodiments, as at least part of data processing or operations, the processor 290 may load commands or data received from another element (e.g., the sensor module 230 or the communication module 210) in the volatile memory 250, process commands or data stored in the volatile memory 250, and store the resultant data in the nonvolatile memory.

According to embodiments, the electronic device 200 may further include various modules. For example, other elements equivalent to the above-described elements may be further included in the electronic device 200. In some embodiments, the electronic device 200 according to embodiments may exclude specific elements from the above elements or replace the same with other elements.

According to embodiments, an electronic device such as the electronic device 100 and the electronic device 200 discussed above may perform wireless communication according to a Bluetooth communication protocol, for example at least one of a Bluetooth Classic communication protocol and a Bluetooth Low Energy (BLE) communication protocol.

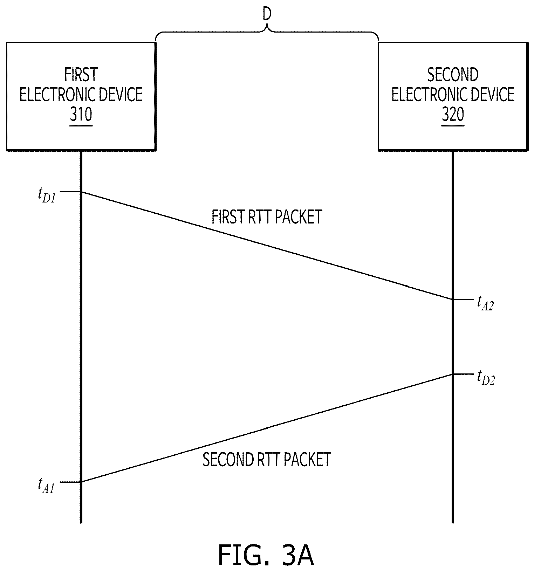

FIGS. 3A-3C are diagrams for explaining an example process for determining a distance between electronic devices using CS, according to embodiments. BLE may include several different techniques for performing ranging. Before the introduction of channel sounding, a rudimentary range was achieved using a received signal strength indicator (RSSI). However, this technique may be easily spoofed using an amplifier, and was not generally considered secure. The introduction of C sounding introduced RTT and also a technique referred to as Round Trip Phase (RTP).

RTP may involve measuring a phase change across a radio path using a relatively simple tone signal, and may potentially be highly accurate. However, RTP may be vulnerable to a delay attack. For BLE CS with a channel spacing of 1 MHz, there may be a 2π wrap at a two-way distance of 300m. Above this wrap, the rate of change with frequency may appear to be relatively slow (because it may increase by just over 2π between channels) and the device may appear to be closer than it actually is. As a result, RTP ranging may be spoofed by introducing a delay using a cable having an appropriate length. In addition, the signal that is often used to perform is relatively simple (e.g., a continuous wave). This may allow a more sophisticated attacker to find many ways to measure and adjust or override the signal in order to spoof it.

As discussed above, the CS extension to the BLE standard specifies packet types that may be used to support RTT measurement. For example, some RTT packets may have a payload that includes a random sequence (or a pseudo-random sequence), and RTT packets may have a payload that includes a sounding sequence. A sounding sequence may refer to a repeated pattern of bits (e.g., zero ("0") followed by one ("1") followed by zero ("0") followed by one ("1"), and so on). Packets which include the sounding sequence may be used to measure a RTT between two devices with relatively fine resolution.

For example, as shown in FIG. 3A, a first electronic device 310 and a second electronic device 320 may attempt to determine a distance D between each other using RTT ranging. The first electronic device 310 may transmit a first RTT packet (which may be, for example, a packet that includes the sounding sequence) at a time point *t*_{*D*1}, which may be referred to as a time of departure corresponding to the first electronic device 310. The first RTT packet may be received by the second electronic device 320 at a time point *t*_{*A*2}, which may be referred to as a time of arrival corresponding to the second electronic device 320. The second electronic device 320 may process the first RTT packet, and may transmit a second RTT packet at a time point *t*_{*D*2}, which may be referred to as a time of departure corresponding to the second electronic device 320. The second RTT packet may then be received by the first electronic device 310 at a time point *t*_{*A*1}, which may be referred to as a time of arrival corresponding to the first electronic device 310. Accordingly, the travel time of the first RTT packet may be *t*_{*A*2} - *t*_{*D*1}, the travel time of the second RTT packet may be *t*_{*A*1} - *t*_{*D*2}, and the total travel time (e.g., the round-trip time) may be (*t*_{*A*2} - *t*_{*D*1)} + (*t*_{*A*1} *- t*_{*D*2}). The first electronic device 310 may use a difference the time point *t*_{*A*1} and the time point *t*_{*D*1} to determine the total travel time (e.g., the round-trip time). For example, before the RTT ranging is performed, the first electronic device 30 and the second electronic device 320 may agree or predetermine a fixed turnaround period (e.g., a fixed amount of time between the time point *t*_{*A*2} and the time point *t*_{*D*2}), and then simply subtract this fixed turnaround time from the time between the time point *t*_{*A*1} and the time point *t*_{*D*1}*.* However, this is only an example, and embodiments are not limited thereto.

After the total travel time is determined, the first electronic device 310 may use the total travel time to calculate the distance D, for example by multiplying the total travel time by the speed of light. According to embodiments, an analysis of the sounding sequence may be used to improve the accuracy of the RTT calculation. For example, when the sounding sequence is modulated using, for example, Gaussian frequency shift keying (GFSK), this may produce two distinct radio tones with different frequencies and different phases. An analysis of the phase difference exhibited by the two tones created by the sounding sequence may allow a fractional timing error to be calculated and used to optimize the ranging process.

According to embodiments, RTT may be more secure than RTP, but RTT may still be vulnerable to relatively sophisticated attacks. For example, a switched delay attack may include switching a delay in and out for the RTP and RTT portions, respectively. A phase manipulation attack may include manipulating a phase either by overriding the signal with interfering tones or radio frequency (RF) mixing. An early detect late commit (EDLC) attack may include detecting the bits or bit sequence early (e.g., using inter symbol interference, and then transmitting a time-advanced copy of the bit sequence.

According to an early commit late detect (ECLD) attack, an attacking device may regenerate the bit stream and insert an FSK transition with a time advance. If the attacking device does not then detect a transition, it may return the phase to the correct trajectory. The ECLD attack may also be performed with RF phase manipulation, in which the attacking device may lock a mixing process to the incoming signal and uses that mixer (and the same linear oscillator (LO) chain) to up-convert the ELDC bit stream.

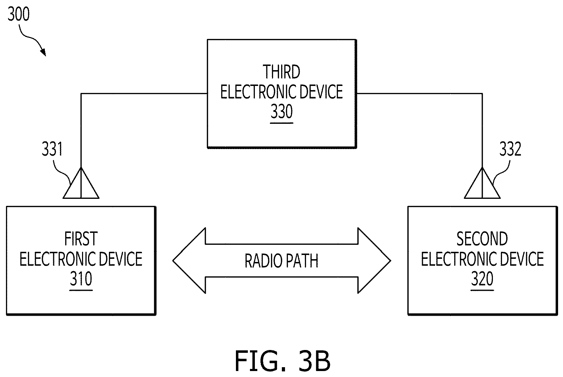

FIG. 3B shows an example of a man-in-the-middle spoofing attack, according to embodiments. As shown in FIG. 3B, a third electronic device 330, which may be referred to as an attacker or an attacking device, may attempt to attack a CS procedure performed by the first electronic device 310 and the second electronic device 320, which may be referred to as legitimate devices or victim devices. The attacker may place one or more antennas (e.g., a first antenna 331 and a second antenna 332) physically close to at least one of the victim devices (e.g., at least one of the first electronic device 310 and the second electronic device 320) which may transmit the RTT packet having the payload including the sounding sequence. The third electronic device 330 may include a relatively powerful amplifier, and/or may be connected to at least one of the first antenna 331 and the second antenna 332 using cables having a relatively low loss in comparison to a relatively high loss experienced by the first electronic device 310 and the second electronic device 320 while communicating over the radio path. Accordingly, the third electronic device 330 may be able to obtain a relatively high signal to noise (SNR) ratio for demodulation of the channel sounding signal, which may allow the attacker to detect the marker sequence with relatively small detection delay, and therefore successfully complete the man-in-the-middle spoofing attack.

In order to counter some attacks, one or more marker sequences may be embedded in the sounding sequence to make the sounding sequence less predictable. This may force the attacker to detect the bits (e.g., demodulate the received signal) instead of merely relying on the repetitive nature of the sounding sequence, which may cause a detection error or increase the detection delay. The detection error or detection delay in the attacker may introduce a phase error, which may be referred to as a glitch, in the spoofed waveform. This glitch may act as a fingerprint in the received CS signal that may be used by the victim device to detect that the waveform has been tampered with, which may be referred to as attack detection.

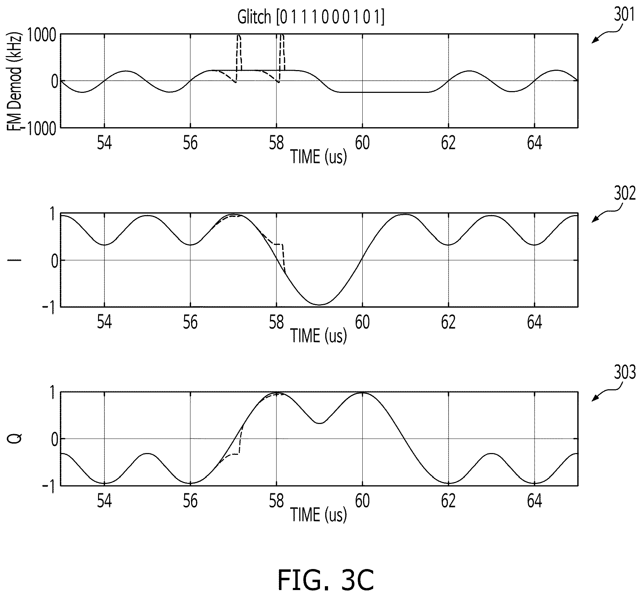

FIG. 3C illustrates examples of artifacts that may be observable in a received signal with a relatively large detection delay. For example, graph 301 shows a frequency demodulation of a received CS signal in which a portion of the sounding sequence is replaced with a marker sequence of one ("1"), followed by one ("1"), followed by zero ("0"), followed by zero ("0"). In this example, glitches may be seen at time 57 and time 58. The glitches may also be detected by measuring a deviation from an ideal phase trajectory, as shown in graph 302, which illustrates an imaginary component of the phase trajectory, and graph 303, which illustrates a real component of the phase trajectory. All of these detection techniques may benefit from an increased detection delay in the attacking device. However, relatively sophisticated attacks such as ECLD may be able to spoof even a waveform including a random marker sequence, which means that additional security may be beneficial.

One potential approach for protecting against attacks such as ECLD attacks includes performing a phase based ranging (PBR) estimation using the sounding sequence correlation simultaneously with the RTT measurement, thus forcing the attacker to introduce the extra complexity of locking to the phase of the attacked waveform. Ultra-wideband (UWB) technology may offer a different solution to this problem, because the symbol rate may be high enough that it may not be possible to realistically mount an ECLD attack or similar attack. The moderately faster symbol time may also help to secure wireless local area network (WLAN) ranging, though attacks are still possible. BLE may be more secure when using a 2 megabit per second (Mbps) waveform with a 0.5 microsecond (us) symbol time. To add even more security, BLE may include an option for a bandwidth-time (BT) product of BT = 2 pulse shape, which may provide decreased inter symbol correlation, and therefore delay for the earliest symbol detection by the attacker may be relatively high in a medium to low SNR condition.

Another technique which may be used to add additional security when performing RTT ranging in wireless communication standards such as BLE may be referred to as transmission (TX) signal-to-noise ratio (SNR). TX SNR may include introducing an artificial noise into the transmitted CS signal, which may increase a detection time required by the attacker (and therefore may cause an increased glitch), which may reduce or eliminate the attacker's ability to spoof the CS signal. In some implementations, the transmitting device may simply advertise a level of the artificial noise, and then the receiving device be tested to check that it produces deviations in the phase trajectory consistent with the advertised noise level.

However, the artificial noise may also degrade the accuracy of the delay measurement used by the CS procedure, and may reduce a reliability of the attack detection. In addition, for RTT packets including a marker sequence, the added noise may introduce errors when used by the legitimate receiver (e.g., one or more of the first electronic device 310 and the second electronic device 320) to detect an attack if the noise is not removed. To avoid false alarms caused by such errors, it may be useful for the two legitimate devices (e.g., the first electronic device 310 and the second electronic device 320) to agree to a particular pattern which may allow the added noise to be retrospectively removed by post-processing (e.g., not immediately while receiving the RTT packet).

Accordingly, embodiments may relate to methods and devices which may be used to generate this artificial noise in such a way that it does not interfere with the ranging accuracy or the attack detection. According to embodiments, such artificial noise may be referred to as "transparent" to the devices performing the CS procedure (e.g., the first electronic device 310 and the second electronic device 320).

According to embodiments this artificial noise may be, or may include, a pseudo-random noise signal which is transparent to legitimate receivers (e.g., the first electronic device 310 and the second electronic device 320), and which disturbs the detection logic in the attacking device (e.g., the third electronic device 330). According to embodiments, the legitimate devices involved in the CS measurement may not be required to synchronize or to know the pattern of the pseudo-random noise signal in advance. Unlike some approaches which may add "dumb" artificial noise such as additive white Gaussian noise (AWGN), the pseudo-random noise signal according to embodiments may not interfere with the RTT measurement result, and may not degrade attack detection performance. However, the pseudo-random noise signal may still cause an attacker to suffer detection error when to detect the sounding sequence in advance or with reduced detection time. In addition, the artificial noise according to embodiments may be compatible with BT=2, 2MBps waveform, and the phase based ranging extension to BLE.

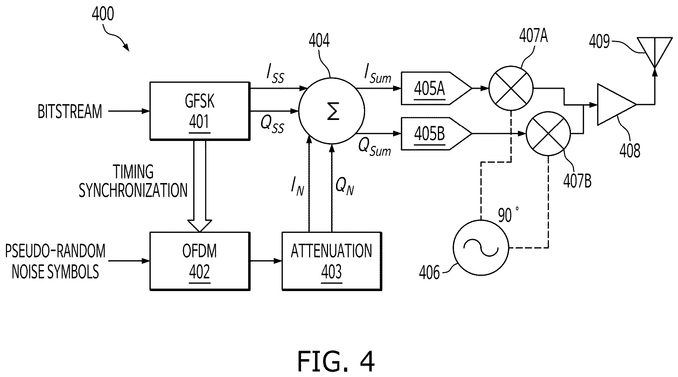

FIG. 4 is a block diagram illustrating a signal transmitter according to embodiments. In embodiments, the signal transmitter 400 illustrated in FIG. 4 may be included in, or otherwise correspond to, at least one of the first electronic device 310 and the second electronic device 320 discussed above. For example, the signal transmitter 400 may be included in a transceiver included in at least one of the first electronic device 310 and the second electronic device 320. As shown in FIG. 4, the signal transmitter 400 may include a GFSK module 401, an orthogonal frequency-division multiplexing (OFDM) module 402, a configurable attenuation module 403, a summation module 404, a first digital-to-analog converter (DAC) 405A, a second DAC 405B, a local oscillator 406, a first mixer 407A, a second mixer 407B, a power amplifier 408, and an antenna 409.

As shown in FIG. 4, the GFSK module 401 may receive a bitstream to be transmitted, and may modulate the bitstream using GFSK. For example, the bitstream may include bits corresponding to a sounding sequence, which may include a repeating pattern of zero ("0") bits and ("1") bits with a pattern length of 32 bits or 96 bits. In some embodiments, the bitstream may also include bits corresponding to one or more marker sequences that may for example replace one or more portions of the sounding sequence. The GFSK module 401 may generate an in-phase sounding sequence component *I_{SS}* and a quadrature sounding sequence component *Q_{SS}*, which may be provided to the summation module 404. According to embodiments, the output of the GFSK module 401 may be referred to as a sounding sequence, sounding sequence symbols, and a sounding sequence signal, but embodiments are not limited thereto.

The OFDM module 402 may receive pseudo-random noise symbols, and may modulate the pseudo-random noise symbols using OFDM. The tone frequencies may be chosen so that, over a suitable integration length, they are orthogonal to the tones of the sounding sequence (e.g., at 0 HZ and ±500 kHz). According to embodiments, it may be beneficial for the output of the OFDM module 402 to line up with the bit boundaries of the GFSK module 401. Therefore, timing synchronization may be performed between the GFSK module 401 and the OFDM module 402. The OFDM module 402 may generate in-phase and quadrature components which may be attenuated by the attenuation module 403 to provide a signal having a desired SNR when combined with the output of the GFSK module 401. The attenuation module 403 may generate an in-phase noise component *I_{N}* and a quadrature noise component *Q_{N}*, which may be provided to the summation module 404. According to embodiments, the output of the OFDM module 402 and the attenuation module 403 may be referred to as artificial noise, artificial noise symbols, artificial noise signals, pseudo-random noise, pseudo-random noise symbols, pseudo-random noise signals, and OFDM symbols, but embodiments are not limited thereto.

The summation module 404 may sum the in-phase sounding sequence component *I_{SS}* with the in-phase noise component *I_{N}* to generate an in-phase summed component *I_{Sum}*, and may sum the quadrature sounding sequence component *Q_{SS}* with the quadrature noise component *Q_{N}* to generate a quadrature summed component *Q_{Sum}.* According to embodiments, the summed signal corresponding to the in-phase summed component *I_{Sum}* and the quadrature summed component *Q_{Sum}* may have an SNR that is suitable for performing a CS procedure, as discussed above.

After the signals are added by the summation module 404, the components of the summed signal may be provided to the first and second DACs 405A and 405B for up conversion to RF by mixing, using the first and second mixers 407A and 407B, with the carrier frequency generated by the local oscillator 406, and amplification by the power amplifier 408, and then may be provided to the antenna 409 for transmission as an RF signal, which may be referred to as a channel sounding signal.

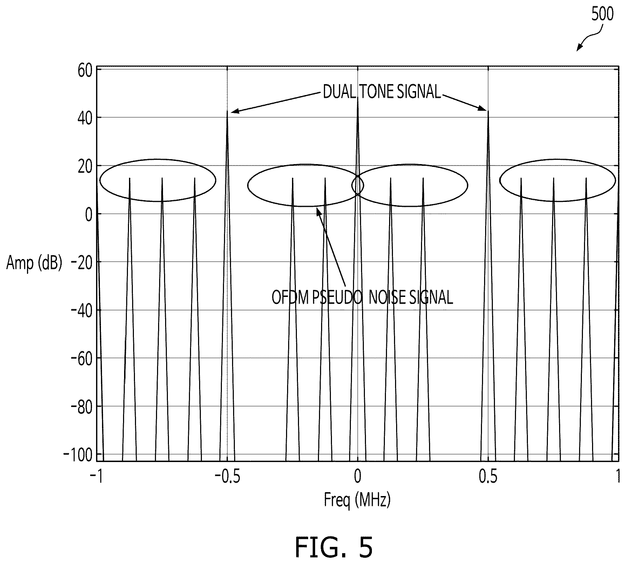

FIG. 5 is a graph illustrating an example of a channel sounding signal, according to embodiments. The graph 500 shown in FIG. 5 illustrates a spectrum generated by capturing and downconverting the RF signal transmitted by the antenna 409, performing timing recovery, and applying a discrete Fourier transform (DFT) on a suitable slice of the I/Q data (in which the OFDM tones have a constant phase and amplitude). As shown in the graph 500, the spectrum may have a comb shape showing the sounding sequence signal with the OFDM symbols clearly visible as multiple discrete tones having a lower magnitude.

As shown for example in FIG. 5, the sounding sequence may create two sinusoidal signals at +/- 500KHz frequency for a 1MHz modulated GFSK signal. If the added artificial noise also has a sinusoidal tone structure and is orthogonal to the sounding sequence, it may not affect the channel sounding measurement. According to embodiments, the OFDM modulated signal may satisfy these conditions.

The pseudo-random noise may be generated using the OFDM module 402. The digital modulated signal S(n) may be expressed according to Equation 1 below: $S \left(n\right) = \frac{1}{\sqrt{2 ⋅ {N}_{s}}} {\sum }_{k = 0}^{{N}_{s} - 1} q \left(k\right) ⋅ {e}^{j 2 π ⋅ {w}_{k} ⋅ n} , n = \left[0,N-1\right]$

In Equation 1 above, {*wₖ*} may denote the set of frequencies used, *N* may denote the OFDM symbol duration, and *q(k)* may denote random phases which may be used for each sub-carrier. According to embodiments, the QPSK alphabet (e.g., {1 + 1*i,* 1 - *1i,* -1 + 1*i,* 1 - 1i}) may provide a suitable trade-off between complexity and randomness, and therefore may be used for *q*(*k*)*.* However, embodiments are not limited thereto, and according to embodiments, the added noise may be generated using any alphabet.

As an example, for a 16µs OFDM symbol with *N* = 256, the set of frequencies {*wₖ*} may include $\left[\frac{- 3}{4}, \frac{- 5}{8}, \frac{- 3}{8}, \frac{- 2}{8}, \frac{- 1}{4}, \frac{1}{4}, \frac{2}{8}, \frac{3}{8}, \frac{5}{8}, \frac{3}{4}\right]$ MHz. As another example, for an 8µs OFDM symbol with *N* = 128, the set of frequencies {*wₖ*} may include $\left[\frac{- 3}{4}, \frac{- 1}{4}, \frac{1}{4}, \frac{3}{4}\right]$ MHz. According to embodiments, these values may be applicable for any 16 times over-sampling ratio, and these settings may guarantee orthogonality to the sounding sequence.

According to embodiments, the 16µs OFDM symbol may provide better security while using more digital area. The choice of which frequency set to use depends on the trade-off between complexity and security level. According to embodiments, these configurations may result in the OFDM symbol having a repetition ratio of two, which may mean that the first portion of the OFDM symbol and the second portion of the OFDM symbol are identical to each other. According to embodiments, this may be referred to as a duplicated option. In some embodiments, each of the first portion and the second portion may have a length that is half of the length of the OFDM symbol. Accordingly, the first portion of the OFDM symbol may be referred to as a first half of the OFDM symbol, and the second portion of the OFDM symbol may be referred to as a second half of the OFDM symbol, but embodiments are not limited thereto.

For the same set of tone frequencies, the OFDM symbol may also be configured so that there is no duplication in one OFDM symbol period, which may be referred to as the non-duplicated option. As an example, for a non-duplicated 8µs OFDM symbol with *N* = 128, the set of frequencies {*wₖ*} may be $\left[\frac{- 3}{4}, \frac{- 5}{8}, \frac{- 3}{8}, \frac{- 2}{8}, \frac{- 1}{4}, \frac{1}{4}, \frac{2}{8}, \frac{3}{8}, \frac{5}{8}, \frac{3}{4}\right]$ MHz. As another example, for a non-duplicated 4µs OFDM symbol with N = 64, the set of frequencies {*wₖ*} may be $\left[\frac{- 3}{4}, \frac{- 1}{4}, \frac{1}{4}, \frac{3}{4}\right]$ MHz.

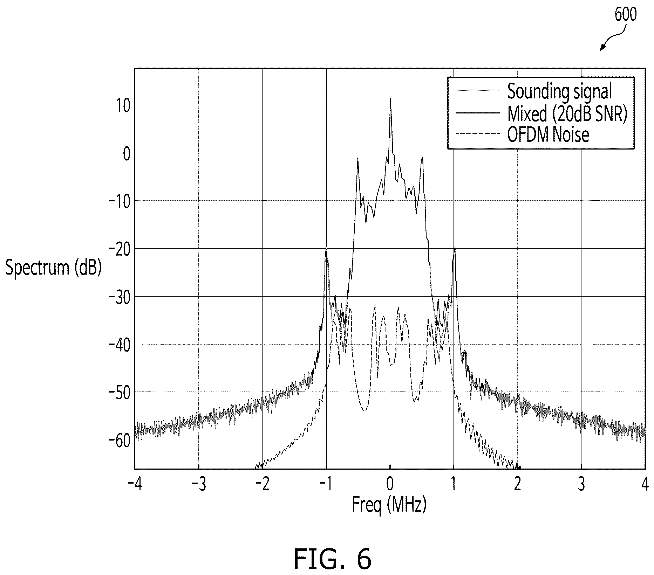

FIG. 6 is a graph illustrating an example of a channel sounding signal, according to embodiments. The graph 600 included in FIG. 6 shows a signal spectrum comparison between an example of a sounding signal including an RTT sounding sequence without any added noise, an example of an OFDM noise signal (e.g., at 20 dB below the sounding sequence), and an example of a mixed signal including the RTT sounding sequence mixed with the OFDM noise at 20 dB SNR.

According to embodiments, a plurality of OFDM noise symbols may be generated to cover the entire payload portion of an RTT packet in order to provide more protection coverage. The timing alignment with the modulated signal of the sounding sequence or random payload may assist in achieving the benefits discussed above. For example, in some embodiments, the OFDM symbol boundary may be aligned with the GFSK symbol boundary. This may not be necessary for maintaining orthogonality between the OFDM symbols and the sounding sequence, but may be beneficial for attack detection processing. In addition, in some embodiments, the last OFDM symbol may be transmitted as a whole or only truncated in a middle of the OFDM symbol (for the duplicated OFDM symbol option) to maintain the orthogonality to the sounding sequence. In addition, there may be gaps in the middle of the OFDM signal. According to embodiments, a length of the gaps may be integer multiples of 1 µs (for a 1MHz modulated bandwidth).

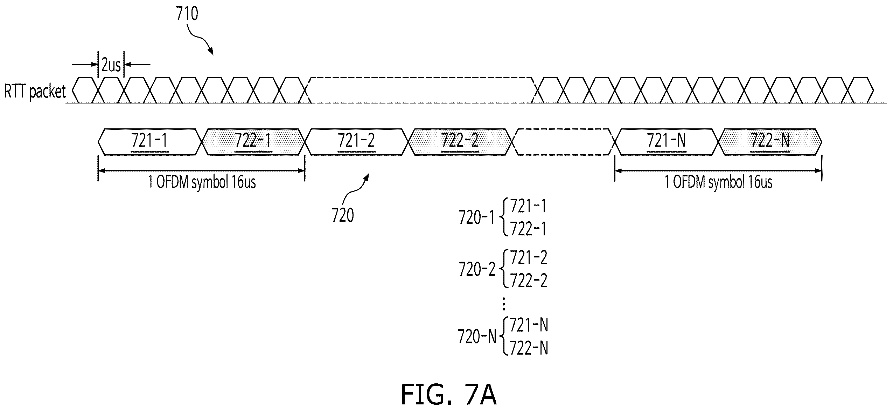

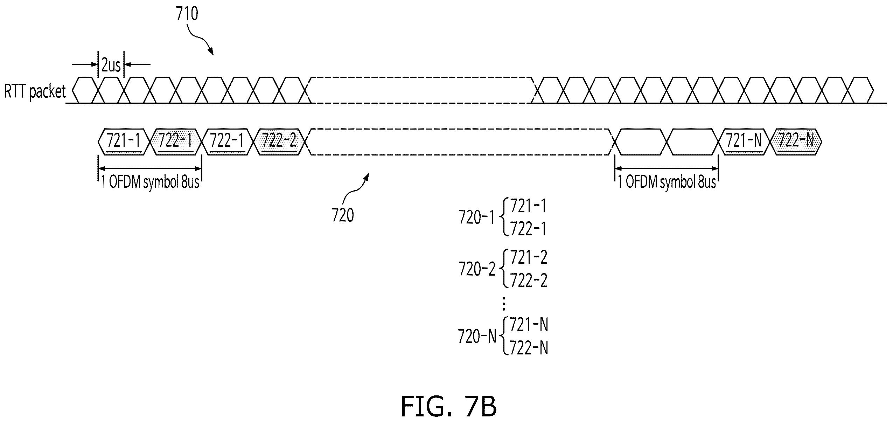

FIGS. 7A-7B are diagrams illustrating examples of elements used to generate a channel sounding signal, according to embodiments. In particular, FIGS. 7A-7B show examples of timing relationships between a modulated waveform of an RTT packet included in the sounding signal 710 (with a 1µs symbol time) and a plurality of OFDM symbols included in the artificial noise signal 720. In FIGS. 7A-7B, a dotted line may represent a middle portion of the RTT packet. According to embodiments, FIG. 7A may illustrate an example including a 16µs OFDM symbol, and FIG. 7B may illustrate an example including an 8µs OFDM symbol.

As shown in FIGS. 7A-7B, the artificial noise signal 720 may include a plurality of OFDM symbols, for example a first OFDM symbol 720-1, a second OFDM symbol 720-2, through an N-th OFDM symbol 720-N. Each of the plurality of OFDM symbols may be divided into a first portion 721 and a second portion 722 which may be a duplicate of the first portion 721. For example, as shown in FIGS. 7A-7B, the first OFDM symbol 720-1 may include a first portion 721-1 and a second portion 722-1, the second OFDM symbol 720-2 may include a first portion 721-2 and a second portion 722-2, and the N-th OFDM symbol 720-N may include a first portion 721-N and a second portion 722-N.

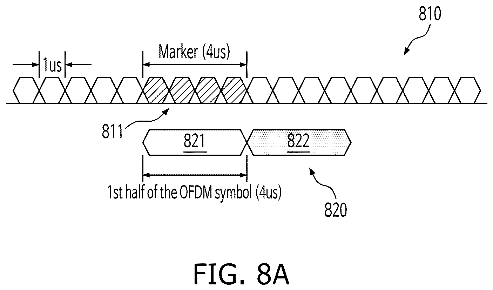

FIGS. 8A-8E are diagrams illustrating example arrangements of marker sequences included in a channel sounding signal, according to embodiments. According to embodiments, to assist a legitimate receiver (e.g., the first electronic device 310 or the second electronic device 320) in removing the duplicate OFDM noise signal, some embodiments may require the marker sequence to coincide with or overlap the first portion of the OFDM symbol. Therefore, the receiver may estimate the OFDM signal using the second portion of the received OFDM signal, and may use this estimated OFDM symbol to cancel or remove the first portion of the OFDM symbol and recover or reconstruct the marker sequence. Because this marker sequence may be recovered, embodiments may allow attack detection to be performed using the marker sequence without degradation or distortion. Examples of removing the OFDM symbol are discussed in greater detail below.

Because the position of the marker may be random or arbitrary, this alignment may be achieved by shifting the starting timing of the OFDM symbol based on the position of the marker sequence, and adding an appropriate number of gaps when more than one marker sequence is present in an RTT packet.

FIG. 8A illustrates an example in which a sounding signal 810 included in a payload of an RTT packet includes a marker sequence 811 having a length of 4us, and an OFDM symbol 820 has a length of 8µs (so that each of the first portion 821 and the second portion 822 of the OFDM symbol 820 has a length of 4µs). In the example shown in FIG. 8A, the beginning of the marker sequence 811 may be aligned with the beginning of the OFDM symbol 820 so that the marker sequence 811 coincides with a first portion 821 of the OFDM symbol 820 according to the duplicated option.

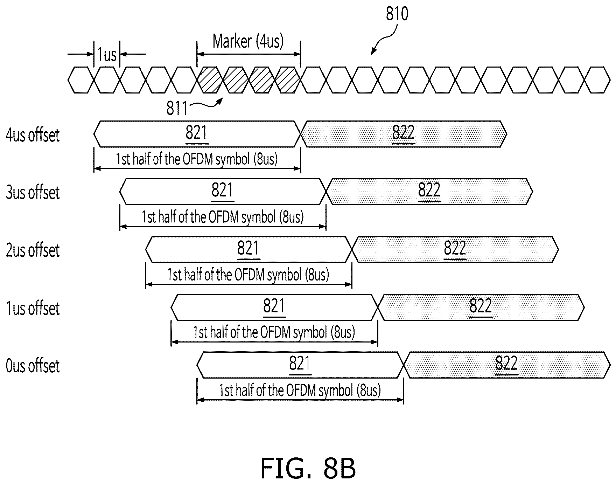

FIG. 8B illustrates an example in which the marker sequence 811 has a length of 4us, and the OFDM symbol 820 has a length of 16us (so that each of the first portion 821 and the second portion 822 of the OFDM symbol 820 has a length of 8µs). In the example shown in FIG. 8B, the beginning of the marker sequence 811 may have an offset of 0µs, 1µs, 2µs, 3µs, or 4µs, while still coinciding with a first portion 821 of the OFDM symbol 820 according to the duplicated option.

For an RTT packet having a payload with a 32µs sounding signal, there may be only one marker sequence embedded. If a continuous pseudo-random noise signal is used, this may mean that the start of the pseudo-random noise may depend on the position of the marker sequence. For an 8µs OFDM symbol, because the marker sequence may be aligned with the OFDM symbol, the receiver may know the start timing of the OFDM symbol. For a 16µs OFDM symbol, it may not be trivial for the receiver to know the start timing of the OFDM symbol. Examples of this potential issue are described in greater detail below.

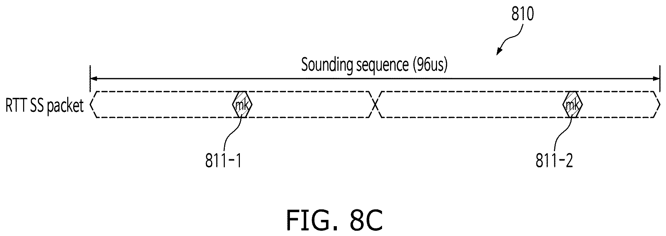

FIG. 8C illustrates an example in which an RTT packet has a payload that includes a sounding signal 810 having a length of 96us. As shown in FIG. 8C, the RTT packet may include a first marker sequence 811-1 and a second marker sequence 811-2. For example, the first marker sequence 811-1 may be included in a first portion (e.g., a first half) of the sounding signal 810, and the second marker sequence 811-2 may be included in a second portion (e.g., a second half) of the sounding signal 810.

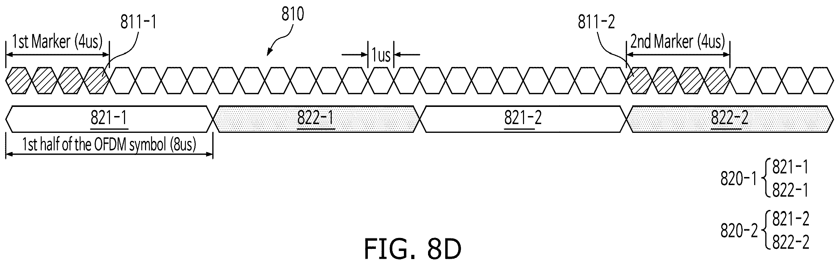

FIGS. 8D-8E illustrate an example in which each of the first marker sequence 811-1 and the second marker sequence 811-2 has a length of 4us, and each of a first OFDM symbol 820-1 and a second OFDM symbol 820-2 has a length of 16us. Accordingly, each of a first portion 821-1 and a second portion 822-1 of the OFDM symbol 820-1 may have a length of 8us, and each of a first portion 821-2 and a second portion 822-2 of the second OFDM symbol 820-2 may have a length of 8us.

According to embodiments, a gap *T_{gap}* between the first marker sequence 811-1 and second marker sequence 811-2 may be expressed according to Equation 2 below, in which n may denote a number of OFDM symbols, *T_{ofdm_sym}* may denote a duration of each OFDM symbol, and a *T_{remainder}* may denote a remaining duration in the sounding sequence 810. ${T}_{gap} = n \times {T}_{ofdm _ sym} + {T}_{remainder}$

An issue may occur when the distance between the first and second marker sequences 811-1 and 811-2 is smaller than half of the OFDM symbol duration (e.g., *T_{gap}* < *T*_{*ofdm_*sym/}2). In this situation, if a full length OFDM symbol is added, the portion (e.g., the second half) of the OFDM symbol may be corrupted by one of the marker sequences and may not be recovered cleanly to cancel the first portion (e.g., the first half) of the OFDM signal. One solution for this issue may be to stop the OFDM signal during the second marker

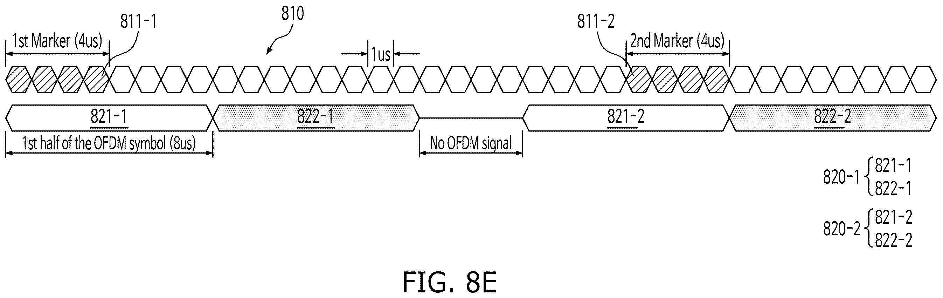

Another issue may occur when a distance between the first marker sequence 811-1 and the second marker sequence 811-2 may be greater than half of the OFDM symbol duration (e.g., *T_{gap}* < *T_{ofdm_sym}*/2), but *T_{remainder}* may be more than half the length of the OFDM symbol, (e.g., *T_{remainder}* > *T*_{*ofdm*_*sym*}/2). An example of this is shown in FIG. 8D. In this situation, if the OFDM symbols are added continuously, the second marker 811-2 will fall into the second portion 822-2 of the second OFDM symbol 820-2, as shown in FIG. 8D. Then, an attacker may use the first portion 821-2 of the second OFDM symbol 820-2 to cancel the second portion 822-2 of the second OFDM symbol 820-2 to improve its own marker detection reliability. According to embodiments, a solution for this issue may be to re-position the OFDM symbol 820-2 such that the second marker sequence 811-2 falls in the first portion 821-2 of the second OFDM symbol 820-2, as shown in FIG. 8E.

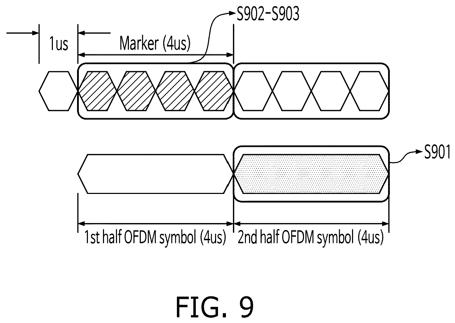

FIGS. 9-11 are diagrams illustrating example processes for reconstructing a marker sequence included in a channel sounding signal, according to embodiments.

As shown in FIG. 9, for OFDM noise according to the duplicated option, the duplication may be exploited when performing attack detection using a marker sequence. For example, the second portion (e.g., the second half) of an OFDM symbol may be used to estimate the entire OFDM symbol. Because the OFDM symbol may be orthogonal to the sounding sequence, a relatively simple fast Fourier transform (FFT) may be sufficient to estimate the complex values carried in the designated frequencies , because both sides may know the position of the frequencies used to generate the OFDM symbol. When the marker sequence starts (e.g., when the bit pattern of the sounding sequence is broken), it may not be orthogonal to the OFDM symbol. However, because the first half of the OFDM symbol may be duplicated in the second half, the entire OFDM symbol may be estimated at operation S901, and then this estimated OFDM symbol may be used to remove or cancel the first half of the OFDM symbol in order to reconstruct or recover the received marker sequence at operation S902. After the cancellation, the marker sequence may be free of added distortion, and therefore may be used to perform attack detection at operation S903.

Therefore, according to embodiments, the artificial noise (e.g., the pseudo-random noise, or the OFDM symbol) may be generated in such a way that its frequency component does not interfere with the frequency components of the CS signal that are used to perform RTT ranging. In addition, because the first half of the OFDM symbol interferes with the marker sequence, and can only be removed by detecting the second half of the OFDM symbol, it may be impossible for an attacking device to gather enough knowledge to effectively spoof the marker sequence until after the marker sequence is completed.

To assist a legitimate receiver (e.g., at least one of the first electronic device 310 and the second electronic device 320) to remove a non-duplicated OFDM noise signal, the OFDM noise signal may not be completely random. For example, to allow cancellation of the OFDM symbol that coincides with the marker sequence, the OFDM signal aligned with the marker sequence may be retransmitted at a latter portion in the RTT packet. The two devices performing the CS procedure (e.g., the first electronic device 310 and the second electronic device 320) may agree in advance on a convention for re-transmitting the OFDM signal covering the marker sequence.

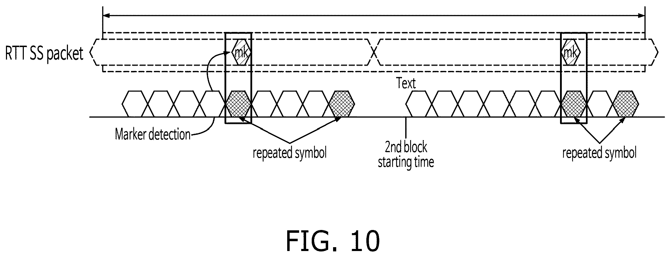

An example of this is illustrated in FIG. 10. As shown in FIG. 10, An RTT packet may have a payload including a sounding sequence 1010, which may include a first marker sequence 1011-1 at an end of the first half of the packet. According to embodiments, an OFDM symbol 1020-2 may be a repeat of an OFDM symbol 1020-1 which coincided with the first marker sequence 1011-1. Similarly, an OFDM symbol 1020-4 may be a repeat of an OFDM symbol 1020-3 which coincided with the second marker sequence 1011-2. After the repeated OFDM symbol is obtained, the cancellation or removal may be performed as described above. In some embodiments, if a marker sequence is too close to the end of a half to allow a repeated OFDM symbol, the repeated OFDM symbol may be omitted.

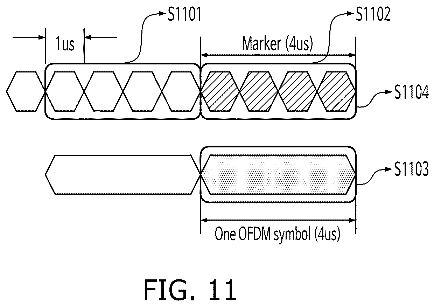

As shown in FIG. 11, for an OFDM symbol without duplication (e.g., without immediate duplication as shown in FIG. 9, and also without repetition as shown in FIG. 10), the processing by the legitimate receiver (e.g., at least one of the first electronic device 310 and the second electronic device 320) may be more complicated. For example, at operation S1101, a legitimate receiver may first estimate the phase of the marker sequence, and may cancel the marker sequence from the received signal at operation S1102, before recovering the second half of the OFDM symbol at operation S1103. After the second half of the OFDM symbol is recovered, it may be removed from the received signal to recover the marker sequence, and attack detection may be performed at operation S1104. The legitimate receiver may know the marker sequence and the position of the marker sequence in advance, and this may allow the legitimate receiver to estimate the phase of the marker sequence before it is cancelled from the signal so that the OFDM symbol can be recovered. The process of marker cancellation may be very sensitive to small errors so this methodology will not be as accurate as the other approaches outlined.

According to embodiments, the TX SNR noise added to the sounding signal may not have a constant envelope, and may not be purely in the phase domain. Accordingly, some of the embodiments discussed above may not directly applicable to a polar modulator. However, embodiments may be adjusted to be implemented in the phase domain, if the symbols used are conformal. For example, the set of frequencies {*wₖ*} may include $\left[\frac{- 3}{4}, \frac{- 5}{8}, \frac{- 3}{8}, \frac{- 2}{8}, \frac{- 1}{4}, \frac{1}{4}, \frac{2}{8}, \frac{3}{8}, \frac{5}{8}, \frac{3}{4}\right]$ MHz, and the symbol alphabet modulated on the tones {1 + 1*i,* 1 - 1*i,* -1 + 1*i,* -1 - 1*i*}. In embodiments, the phase noise may be created as a complex multiplier of the modulation, and therefore may not be in the Cartesian description added to the modulation. The phase may be a real-valued quantity (e.g., not a complex-valued quantity), so only positive frequencies may be used. When phase noise is combined with the phase signal from the complex envelope signal, negative frequency tones may exist, but they may have a well-defined relationship to the positive tones, which may be referred to as being conformable. As a result, in the example set of frequencies {*wₖ*} described above, only five of the frequencies (e.g., the positive frequencies) may be used. In some embodiments, compensation for the reduced number of tones may be achieved by extending the symbol alphabet. Because phase noise is being used, linear superposition may only be achieved when the small angle approximation holds. At some of the SNRs which may be used, embodiments may operate in the mildly non-linear region, and the tones may effect each other, causing inter symbol interference. This may limit the density of the signal alphabet, but the effect may be small enough that it may not be a concern (e.g., may be negligible) for the alphabet sizes discussed herein.

Although examples are described above which relate to a 1 Mbps BLE modulation, embodiments are not limited thereto. For example, embodiments may be applied to BLE 2Mbps (e.g., with pulse shape BT=0.5 or BT=2).

Embodiments may apply to different oversampling ratios with minor adjustments. In addition, although embodiments are described above which relate to OFDM symbols having a length of 8us, embodiments are not limited thereto. For example, OFDM symbols having lengths of 32µs and 64µs may also be used. These may have greater implementation complexity because they may have a larger number of OFDM tones

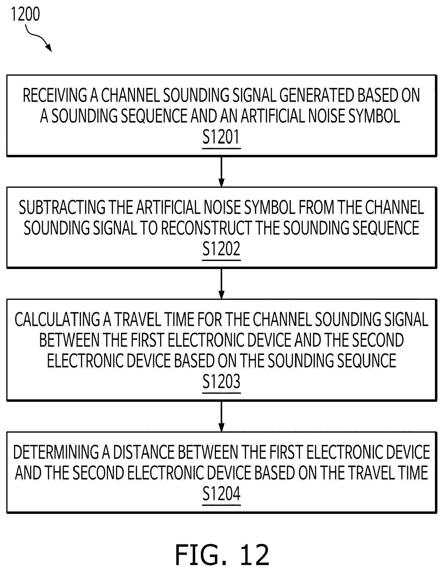

FIG. 12 is a flowchart of a process 1200 for performing channel sounding. In embodiments, one or more of the operations of the process 1200 may be performed by any of the electronic devices discussed above with reference to FIGS. 1-11.

As shown in FIG. 12, at operation S1201, the process 1200 may include receiving, by a first electronic device from a second electronic device, a channel sounding signal generated based on a sounding sequence and an artificial noise symbol from the second electronic device. In embodiments, the first electronic device may correspond to the first electronic device 310, and the second electronic device may correspond to the second electronic device 320.

As further shown in FIG. 12, at operation S1202, the process 1200 may include subtracting the artificial noise symbol from the channel sounding signal to reconstruct the sounding sequence.

As further shown in FIG. 12, at operation S1203, the process 1200 may include calculating a travel time for the channel sounding signal between the first electronic device and the second electronic device based on the sounding sequence.

As further shown in FIG. 12, at operation S1204, the process 1200 may include determining a distance between the first electronic device and the second electronic device based on the travel time.

In embodiments, the artificial noise symbol may include a pseudo-random noise symbol.

In embodiments, the sounding sequence may be generated using GFSK, and the artificial noise symbol may be generated using OFDM.

In embodiments, the artificial noise symbol may be further generated using QPSK.

In embodiments, the artificial noise symbol may be orthogonal to the sounding sequence in the channel sounding signal.

In embodiments, the sounding sequence may further include a marker sequence, and the process 1200 may further include performing attack detection based on the marker sequence.

In embodiments, the artificial noise symbol may include a first portion and a second portion, and the first portion may be identical to the second portion in a time domain.

In embodiments, in the channel sounding signal, the marker sequence may overlap with the first portion in the time domain, and the process 1200 may further include reconstructing the marker sequence by subtracting the first portion from the channel sounding signal based on the second portion.

Although FIG. 12 shows example blocks of the process 1200, in some implementations, the process 1200 may include additional blocks, fewer blocks, different blocks, or differently arranged blocks than those depicted in FIG. 12. Additionally, or alternatively, two or more of the blocks of the process 1200 may be arranged or combined in any order, or performed in parallel.

The electronic device according to various embodiments disclosed in the present disclosure may be one of various types of electronic devices. The electronic devices may include, for example, a portable communication device (e.g., a smartphone), a computer device, a portable multimedia device, a portable medical device, a camera, a wearable device, or a home appliance. According to embodiments of the disclosure, the electronic devices are not limited to those described above.

It should be appreciated that various embodiments of the disclosure and the terms used therein are not intended to limit the technological features set forth herein to particular embodiments and include various changes, equivalents, or relocations for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

One or more embodiments as set forth herein may be implemented as software (e.g., the program 1640) including one or more instructions that are stored in a storage medium (e.g., internal memory 1636 or external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to embodiments, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device (310) for performing channel sounding, the first electronic device (310) comprising:
a transceiver configured to communicate with a second electronic device (320);
at least one processor (120); and
a memory (130) configured to store instructions which, when executed by the at least one processor (120), cause the first electronic device (310) to:
receive (S1201) a channel sounding signal generated based on a sounding sequence and an artificial noise symbol from the second electronic device (320);
subtract (S1202) the artificial noise symbol from the channel sounding signal to reconstruct the sounding sequence;
calculate (S1203) a travel time between the first electronic device (310) and the second electronic device (320) based on the sounding sequence; and
determine (S1204) a distance between the first electronic device (310) and the second electronic device (320) based on the travel time.

2. The first electronic device (310) of claim 1, wherein the artificial noise symbol comprises a pseudo-random noise symbol.

3. The first electronic device (310) of claim 1 or 2, wherein the sounding sequence is generated using Gaussian frequency-shift keying, GFSK, and the artificial noise symbol is generated using orthogonal frequency-division multiplexing, OFDM, with quadrature phase shift keying, QPSK.

4. The first electronic device (310) of any one of claims 1 to 3, wherein the artificial noise symbol is orthogonal to the sounding sequence in the channel sounding signal.

5. The first electronic device (310) of any one of claims 1 to 4, wherein the sounding sequence further comprises a marker sequence (811), and
wherein the instructions, when executed by the at least one processor (120), further cause the first electronic device (310) to perform attack detection based on the marker sequence (811).

6. The first electronic device (310) of claim 5, wherein the artificial noise symbol comprises a first portion (721) and a second portion (722),
wherein the first portion (721) is identical to the second portion (722) in a time domain,
wherein, in the channel sounding signal, the marker sequence (811) overlaps with the first portion (721) in the time domain, and
wherein the instructions, when executed by the at least one processor (120), further cause the first electronic device (310) to reconstruct the marker sequence (811) by subtracting the first portion (721) from the channel sounding signal based on the second portion (722).

7. A method of performing channel sounding, the method being performed by at least one processor (120) and comprising:
receiving (S1201), by a first electronic device (310) from a second electronic device (320), a channel sounding signal generated based on a sounding sequence and an artificial noise symbol from the second electronic device (320);
subtracting (S1202) the artificial noise symbol from the channel sounding signal to reconstruct the sounding sequence;
calculating (S1203) a travel time for the channel sounding signal between the first electronic device (310) and the second electronic device (320) based on the sounding sequence; and
determining (S1204) a distance between the first electronic device (310) and the second electronic device (320) based on the travel time.

8. The method of claim 7, wherein the artificial noise symbol comprises a pseudo-random noise symbol.

9. The method of claim 7 or 8, wherein the sounding sequence is generated using Gaussian frequency-shift keying, GFSK, and
wherein the artificial noise symbol is generated using orthogonal frequency-division multiplexing, OFDM, with quadrature phase shift keying, QPSK.

10. The method of any one of claims 7 to 9, wherein the artificial noise symbol is orthogonal to the sounding sequence in the channel sounding signal.

11. The method of any one of claims 7 to 10, wherein the sounding sequence further comprises a marker sequence (811), and
wherein the method further comprises performing attack detection based on the marker sequence (811).

12. The method of claim 11, wherein the artificial noise symbol comprises a first portion (721) and a second portion (722),
wherein the first portion (721) is identical to the second portion (722) in a time domain,
wherein, in the channel sounding signal, the marker sequence (811) overlaps with the first portion (721) in the time domain, and
wherein the method further comprises reconstructing the marker sequence (811) by subtracting the first portion (721) from the channel sounding signal based on the second portion (722).

13. A second electronic device (320) for performing channel sounding, the second electronic device (320) comprising:
a Gaussian frequency-shift keying, GFSK, modulator (401) configured to generate a sounding sequence;
an orthogonal frequency-division multiplexing, OFDM, modulator (402) configured to generate an artificial noise symbol;
at least one processor (120); and
a memory (130) configured to store instructions which, when executed by the at least one processor (120), cause the second electronic device (320) to:
generate a channel sounding signal based on a sum of the sounding sequence and the artificial noise symbol; and
transmit the channel sounding signal to a receiver.

14. The second electronic device (320) of claim 13, wherein the artificial noise symbol is further generated using quadrature phase shift keying, QPSK.

15. The second electronic device (320) of claim 14, wherein the artificial noise symbol is orthogonal to the sounding sequence in the channel sounding signal.
